# EUROPEAN PATENT APPLICATION

(11) **EP 0 905 685 A1**
(43) Date of publication of application: **31.03.1999**
(21) Application number: 97939198.4
(22) Date of filing: 05.09.1997
(51) Int. Cl.: G11B 11/10, G11B 7/00

(54) **OPTICAL RECORDING METHOD AND OPTICAL RECORDER**

(30) Priority: 09.04.1997 JP 91009/97
(71) Applicant: NIKON CORPORATION, Tokyo 100 (JP)
(72) Inventor: MATSUMOTO, Hiroyuki, Tokyo 100 (JP); ISHII, Koichiro, Tokyo 100 (JP); TAKIZAWA, Minoru, Tokyo 100 (JP); YOSHIBE, Satomi, Tokyo 100 (JP)
(74) Representative: Grünecker, Kinkeldey, Stockmair & Schwanhäusser Anwaltssozietät
(86) International application number: JP9703135
(87) International publication number: WO9810419

(57) **Abstract**

Information is recorded on a recording medium by applying light to the recording medium. A test recording is carried out by applying light to the recording medium while the intensity of the light is successively varied. At least one of the upper limit and the lower limit of the light intensity with which information can be recorded on the medium normally is determined from the recording test results and the information concerning the upper limit or the lower limit is held on the predetermined part of the recording medium or a recorder. The next test is carried out with the light intensity based upon the held upper limit or lower limit.

## Description

### TECHNICAL FIELD

The present invention relates to an optical recording method and apparatus and, more particularly, to a test recording method and an optical recording apparatus for an optical disk.

### BACKGROUND ART

Recently, efforts have been made to develop an optical recording/reproducing method which meets various requirements including a high recording density, a large capacity, a high access speed, and a high recording/reproducing speed, together with a recording apparatus, a reproducing apparatus, and a recording medium which are used for the method. As a result, a magneto-optical recording scheme, a phase change recording scheme, and the like have been developed.

Of a variety of optical recording/reproducing methods, the magneto-optical recording/reproducing scheme is the most practical method because of its unique advantage, i.e., being capable of erasing recorded information, and allowing repetitive recording of new information.

A magneto-optical recording disk (medium) used for this magneto-optical recording/reproducing method has a magnetic film consisting of one or a plurality of layers and serving as a recording layer. As such a magnetic film, a perpendicular magnetic film having a high recording density and a high signal strength has been developed and used. For example, such a magnetic film is made of an amorphous material such as GdFe, GdCo, GdFeCo, TbFe, TbCo, or TbFeCo. In general, a perpendicular magnetic film has concentrical or helical tracks, on which information is recorded.

In forming marks (information), a characteristic feature of a laser beam, i.e., excellent coherence in terms of space and time, is used to focus a beam to a spot as small as the diffraction limit determined by the wavelength of the laser beam. A track surface is irradiated with the focused beam and the recording film is heated to form a mark having a diameter of 14 µm or less, thereby recording information. In optical recording, a recording density of about 10⁸ marks/cm² can be theoretically attained. This is because a laser beam can be focused to a spot having a diameter as small as the wavelength of the beam.

In magneto-optical recording, a laser beam is focused on a perpendicular magnetization layer to heat it. Meanwhile, a recording magnetic field Hb is externally applied to the heated portion in a direction opposite to the initialization direction of the film. A coercive force Hc of the locally heated portion decreases to become smaller than the recording magnetic field Hb. As a result, the magnetization of the portion is aligned in the direction of the recording magnetic field Hb. In this manner, a mark magnetized in a direction opposite to the initialization direction is formed.

In general, light is an electromagnetic wave having electromagnetic field vectors that diverge in all directions on a plane perpendicular to the optical path. When light is converted into linearly polarized light and a perpendicular magnetic film is irradiated with the linearly polarized light, the light is either reflected by the film surface or transmitted through the perpendicular magnetic film. At this time, the plane of polarization rotates in the direction of magnetization. This phenomenon of rotation is called a magnetic Kerr effect or magnetic Faraday effect. If, for example, the plane of polarization of the reflected light rotates through θK° with respect to the magnetization in the initialization direction, the plane of polarization rotates through -θK° with respect to the magnetization in the recording direction. If, therefore, the axis of an optical analyzer (polarizer) is perpendicularly set on a plane inclined by -θK°, light reflected by a mark magnetized in the initialization direction cannot pass through the analyzer. In contrast to this, light reflected by a mark magnetized in the recording direction is transmitted through the analyzer by an amount corresponding to the product of the incident amount by (sin2θK)² and is captured by a detector (photoelectric conversion means). As a result, the mark magnetized in the recording direction looks brighter than the mark magnetized in the initialization direction, and hence the detector generates a strong electrical signal. Since the electrical signal from the detector is modulated in accordance with the recorded information, the information can be reproduced.

As another magneto-optical recording method, an optical modulation overwrite scheme (direct overwrite scheme) has been disclosed (Japanese Laid-Open Patent Application No. 62-175948 = DE3,619,618A1 = USP 5,239,524). This recording scheme uses a multilayer magneto-optical recording medium capable of overwrite, basically comprising a memory layer (to be referred to as an M layer hereinafter) made of a thin magnetic film capable of perpendicular magnetization, and a recording layer (to be referred to as a W layer hereinafter) made of a thin magnetic film capable of perpendicular magnetization. The two layers are exchange-coupled, and only the magnetization of the W layer can be aligned in a predetermined direction at room temperature without changing the direction of magnetization of the M layer. Information is recorded on this medium by using a laser beam (with a high level PH and a lower level PL) pulse-modulated in accordance with binary information.

The phase change recording scheme uses a recording medium, such as a GeSbTe-based medium, which can reversibly repeat phase change from a crystalline state to an amorphous state. In this medium, a crystalline state indicates an erased state, and an amorphous state indicates a recorded state. In reproducing information, the medium is irradiated with a light beam to convert the beam into a strong/weak electrical signal by using the difference in reflectance between the crystalline state and the amorphous state. This medium is also capable of overwrite by using a laser beam modulated into a beam having a binary value, i.e., a high or low level.

When recording is actually performed on an optical disk, a light intensity (laser power) must be finely adjusted in accordance with the recording temperature and sensitivity of the disk and the environmental temperature to optimize a mark shape. If recording is performed with a recording power considerably deviating from the optimal power, the shape or size of the formed mark differs from the shape or size of the mark to be recorded. Even if this information is reproduced, and the reproduced signal does not correspond to the recorded information, an error occurs, and the information cannot be read.

An optimal light intensity changes depending on factors such as a radial position on a disk, the temperature of the disk, and the temperature of a recording/reproducing apparatus for outputting a laser beam, as well as the surface of the disk. Some commercially available recording/reproducing apparatuses are designed to perform sensitivity adjustment by performing test recording before information is recorded. To perform test recording, optimal recording powers are found by repeatedly performing erasing, recording, and reproducing operations while changing the power in the inner and outer peripheral portions or the inner peripheral portion, intermediate portion, and outer peripheral portion of an optical disk immediately after the optical disk is loaded into the drive unit or the temperature of the drive unit changes during operation. According to another method, to obtain the optimal recording powers in all areas which can be used to record information, test recording is performed in the innermost and outermost peripheral areas to obtain optimal powers, and the optimal power in the intermediate area in which no test recording is performed is obtained by calculation based on the two recording powers.

After the apparatus is activated, the temperature of an optical disk changes as it is used with respect to the temperature immediately after the recording medium is inserted or replaced. With this change in temperature, the optimal intensity of a laser beam changes. For this reason, recording cannot be accurately performed. To cope with this problem, the recording power setting must be updated by frequently performing test recording as the environmental temperature or the like changes. If, however, test recording is frequently is performed during use, the substantial processing speed decreases.

In the above overwrite recording scheme of recording information on an optical recording medium capable of overwrite by modulating the recording light intensity into at least two values, i.e., high and low levels, at least two recording powers of high and lower levels must be independently set. A longer period of time is therefore required to obtain optimal recording powers. Consequently, the advantage of overwrite recording, i.e., a high transfer rate, cannot be fully utilized.

### DISCLOSURE OF THE INVENTION

It is an object of the present invention to provide an optical recording method and apparatus which can perform recording with proper light intensities even if a temperature change occurs, and can prevent a decrease in processing speed.

According to the present invention, there is provided an optical recording method of recording information on a recording medium irradiated with a beam while modulating an intensity of the beam, characterized by comprising the steps of
setting a plurality of test recording areas for determining recording conditions in areas at different radial positions on the recording medium, performing test recording in each test recording area, obtaining recording conditions corresponding to each area in recording on the recording medium on the basis of reproduced information from test-recorded information, obtaining an intensity of a beam for recording in another area on the recording medium on the basis of the obtained recording conditions, obtaining, when a change in temperature of a recording apparatus or the recording medium is detected after test recording, recording conditions after the change in temperature by performing test recording again, and determining light intensities for recording information on the recording medium on the basis of the recording conditions after the temperature change.

With this method of the invention, light intensities for recording on an optical recording medium capable of direct overwrite may be determined.

The method of the invention may be applied for determining light intensities for recording on a recording medium which may be divided into a plurality of areas, in each of which area the light intensity for recording on an optical recording medium can be controlled.

Test recording may be performed for three areas, that is an innermost peripheral area, an outermost peripheral area, and an intermediate area of a recordable area.

When a temperature change is detected, test recording may be performed again in a test recording area on the outermost peripheral area on the recording medium to obtain light intensities, and light intensities for recording on all recordable areas on the recording medium may be determined on the basis of the obtained light intensities.

In addition, according to the present invention, there is provided an optical recording method of recording information on a recording medium irradiated with a beam while modulating an intensity of the beam, characterized by comprising the steps of
setting a plurality of test recording areas for determining recording conditions in areas at different radial positions on the recording medium, performing test recording on the recording medium a plurality of times while changing a light intensity, obtaining recording conditions corresponding to each area in recording on the recording medium on the basis of reproduced information in connection with test-recorded information, obtaining intensities of beams for recording in another area of the recording medium on the basis of the recording conditions, performing, after a lapse of a predetermined time, test recording in at least one of the plurality of test recording areas a predetermined time after the test recording so as to obtain recording conditions after a lapse of the predetermined time, and obtaining light intensities for recording information on the recording medium on the basis of the obtained recording conditions.

Furthermore, according to the present invention, there is provided an optical recording apparatus characterized by comprising:
rotation means for rotating a recording medium;
temperature detection means for detecting a temperature of the recording medium or the optical recording apparatus;
modulation means for modulating an intensity of a beam subjected to irradiation in accordance with information to be recorded;
reproduction means for reproducing information recorded by test recording;
means for obtaining recording conditions for each test recording area from reproduced information obtained by the reproduction means, and when the temperature of the recording medium or the optical recording apparatus changes, obtaining recording conditions from reproduced information obtained by test recording performed afterward; and
calculation means for calculating light intensities in all areas in recording information on the basis of the recording conditions in each test recording area which are obtained by the means.

According to the present invention, there is provided an optical recording method of recording information on a recording medium irradiated with light, characterized by comprising the steps of:
performing test recording on the recording medium while sequentially changing an intensity of light subjected to irradiation;
obtaining at least one of upper and lower limits of light intensities which allow proper recording on the medium from the test recording result;
holding information about the upper or lower limit in the recording medium or a predetermined portion in the recording apparatus; and
performing a next test recording operation with a light intensity based on the held upper or lower limit.

In the method of the invention, a light intensity range in which test recording is to be performed may be determined on the basis of the upper or lower limit.

In the method of the invention, the next test recording operation may be performed a predetermined time after the test recording.

In the method of the invention, the next test recording operation may be performed when a change in temperature of the recording medium or a recording apparatus is detected.

In the method of the invention, the recording medium may be a disk-like recording medium,
the first test recording after a power supply of the recording apparatus is turned on or after the recording medium is loaded, may be performed in areas at a plurality of radial positions on the recording medium, and
the next test recording may be performed at one radial position on the recording medium, and light intensities in all areas on the recording medium may be obtained on the basis of a light intensity obtained by the test recording at one position.

In the method of the invention, the recording medium may be a disk-like recording medium, and
in an initial test recording operation performed for the first time after the recording medium is replaced with another recording medium, test recording may be performed in areas at a plurality of radial positions on the recording medium while a light intensity is changed on the basis of the held upper or lower limit of light intensities.

In the method of the invention, information may be recorded on the recording medium by using an optical modulation recording scheme of modulating a light intensity into at least two values.

In the method of the invention, the recording medium may be a recording medium capable of direct overwrite.

In addition, according to the present invention, there is provided an optical recording method of recording information on an optical recording medium, characterized by comprising the steps of
in obtaining a recording beam intensity by test recording, setting a recording beam intensity range including recording a beam intensity value obtained by an immediately preceding or preceding test recording operation, and performing test recording upon selecting a recording beam intensity from the intensity range.

In the method of the invention, the recording beam intensity range may be an intensity range in which a recording beam intensity value obtained by an immediately preceding or preceding test recording operation is a median.

In obtaining a recording beam intensity by test recording, a recording beam intensity range including recording a beam intensity value obtained by the immediately preceding test recording operation may be set, and test recording may be performed upon selection of a recording beam intensity from the intensity range.

Test recording may be performed while sequentially setting recording beam intensities on the basis of a recording beam intensity obtained by an immediately preceding or preceding test recording operation as an initial value so as to gradually increase a deviation from the initial value.

Moreover, according to the present invention, there is provided an optical recording method of recording information on an optical recording medium, characterized by comprising the steps of
in obtaining a recording beam intensity for a new recording medium by test recording when the optical recording medium is replaced, setting a recording beam intensity range including a recording beam intensity value obtained by an immediately preceding or preceding test recording operation, and performing test recording upon selecting a recording beam intensity from the intensity range.

The optical recording medium may be an optical recording medium capable of performing overwrite recording by modulating a recording beam intensity into at least two values, i.e., high and low levels.

### BRIEF DESCRIPTION OF THE DRAWINGS

Fig. 1 is a view showing the arrangement of an optical recording apparatus used in embodiments of the present invention;
Fig. 2 is a sectional view showing an example of a magneto-optical recording medium capable of direct overwrite;
Fig. 3 is a sectional view showing an example of a phase change medium capable of direct overwrite;
Fig. 4 is a view showing the arrangement of test recording areas when viewed from the vertical direction with respect to the recording surface of an optical disk;
Fig. 5 is a graph showing power modulation in direct overwrite;
Fig. 6 is a graph showing the relationship between zones and optimal recording powers PH;
Fig. 7 is a graph showing another example of power modulation in direct overwrite;
Fig. 8 is a graph showing still another example of power modulation in direct overwrite;
Fig. 9 is a graph showing the relationship between optimal recording powers and zones, based on the optimal recording powers obtained in test recording areas by test recording in the first embodiment;
Fig. 10 is a view showing the arrangement of another optical recording apparatus used in the embodiments of the present invention;
Fig. 11 is a view showing a table generated on the basis of the optimal recording power obtained in each zone by test recording;
Fig. 12 is a view showing a table of the optimal recording powers obtained in the respective recording areas by the first embodiment;
Fig. 13 is a view showing a procedure for a recording method according to the second embodiment;
Fig. 14 is a graph showing how the upper and lower limits of a recording power in test recording are obtained in the second embodiment;
Fig. 15 is a graph showing the relationship between the recording powers and the number of error bytes after a reproducing operation in the second embodiment;
Fig. 16 is a view showing the allowable values of recording powers obtained in the respective test recording areas by the second embodiment;
Fig. 17 is a view showing a procedure for a recording method according to the third embodiment;
Fig. 18 is a view showing a procedure for setting a recording power in the third embodiment;
Fig. 19 is a view showing a procedure for setting two recording beam intensities in a recording method for an optical modulation overwrite recording medium in the third embodiment; and
Fig. 20 is a view showing the arrangement of an auto-changer apparatus.

### BEST MODE FOR CARRYING OUT THE INVENTION

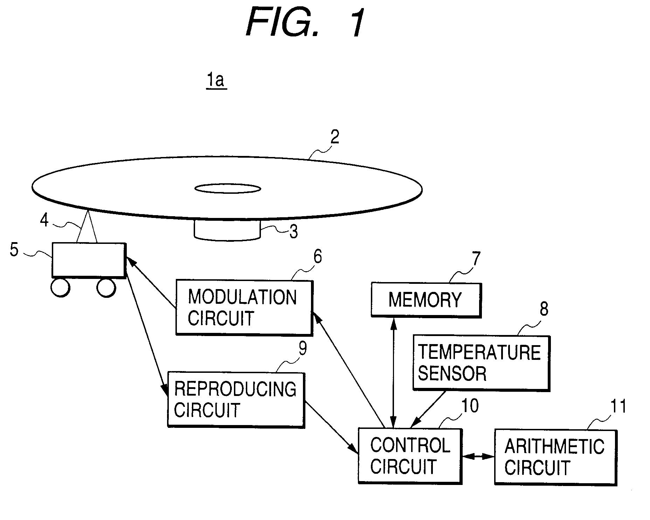

Fig. 1 shows the arrangement of an optical recording apparatus used in an embodiment of the present invention.

Referring to Fig. 1, an optical recording apparatus 1a includes a driving motor 3 for rotating an optical disk 2, and an optical head 5 for recording/reproducing/erasing information when a disk surface is irradiated with a focused laser beam 4. The optical head 5 can be moved in the radial direction of the disk by a coarse adjustment motor (not shown), and hence the position in the radial direction where information is recorded/reproduced/erased can be changed.

A modulation circuit 6 modulates the intensity of the laser beam 4 for a test recording operation on the optical disk 2 in accordance with a test pattern. A memory 7 stores a plurality of test pattern data to be recorded in a test recording operation. A temperature sensor 8 detects the temperature in the optical recording apparatus 1a or of the optical disk 2, and outputs the detection result to the control circuit 10a. A reproducing circuit 9 restores a reproduced signal from the optical head 5 as data, and sends it to the control circuit 10a. The test pattern recorded on the optical disk 2 in a test recording operation is reproduced by the reproducing circuit 9.

The control circuit 10 obtains recording conditions corresponding to the respective test recording areas in accordance with the reproduced information obtained by the reproducing circuit 9. The control circuit 10 also receives a signal from the temperature sensor 8. When the signal indicates a temperature change equal to or larger than a predetermined value, the control circuit 10 reads out test pattern data from the memory 7, and sends the data to the modulation circuit 6, thereby starting a test recording operation. An arithmetic circuit 11 calculates the optimal light intensities for all recording areas on the basis of the recording conditions obtained by the control circuit 10a when information is to be recorded.

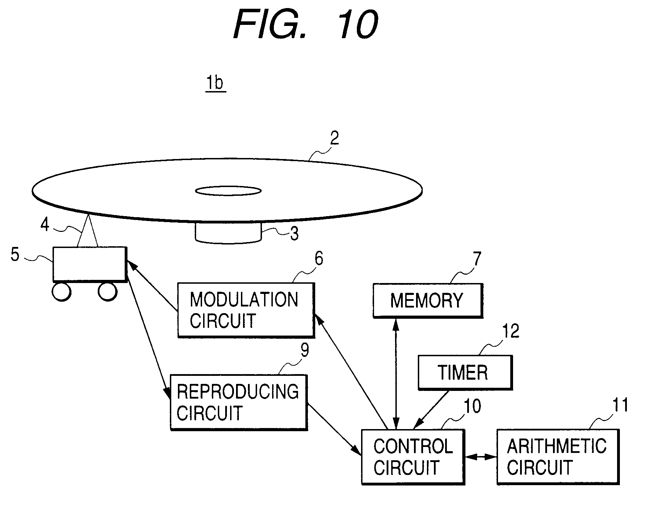

Fig. 10 shows another arrangement of the optical recording apparatus used in this embodiment.

An optical recording apparatus 1b in Fig. 10 uses a timer 12 in place of the temperature sensor 8 in the apparatus 1a in Fig. 1. The timer 12 outputs a signal to a control circuit 10 every time a predetermined period of time elapses. Upon reception of the signal indicating a lapse of the predetermined period of time from the timer 12, the control circuit 10b reads out test pattern data from the memory 7, and sends it to a modulation circuit 6, thereby starting a test recording operation. The remaining operations are the same as those of the optical recording apparatus 1a in Fig. 1.

Among recording media on which information is recorded by irradiation of light, a magneto-optical recording medium capable of performing direct overwrite by using a recording method of modulating the intensity of light into multivalue data will be exemplified in this embodiment. In a direct overwrite operation, the medium is irradiated with low-power and high-power laser beams. Old information is erased by irradiation of a low-power laser beam, and at the same time, new information is recorded by irradiation of a high-power laser beam modulated in accordance with the new information to be recorded. If a low power, in particular, is not sufficiently high (excessively low), old information cannot be erased, and new information cannot be properly recorded. A test recording operation is the step of obtaining the optimal power for a recording operation or an allowable recording power. If, therefore, a proper power cannot be obtained, a considerable deterioration in reliability occurs.

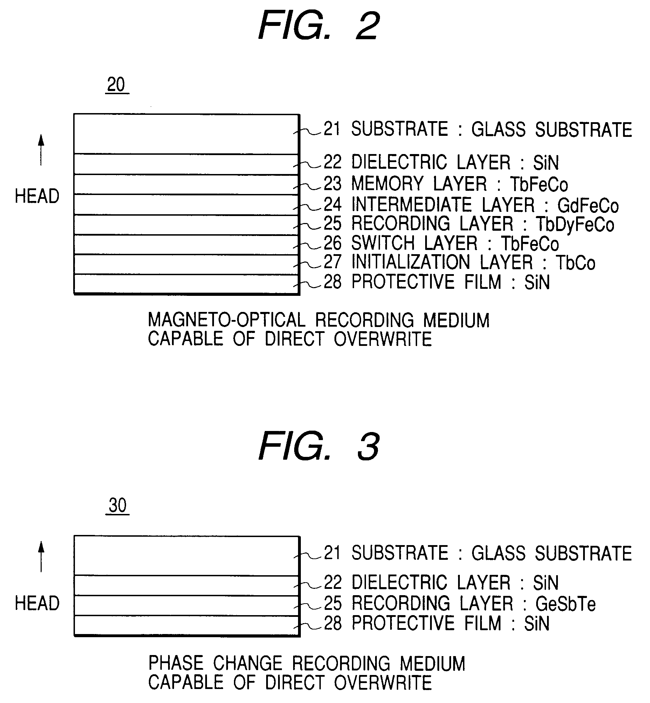

Fig. 2 is a sectional view of a magneto-optical recording medium capable of direct overwrite. A magneto-optical recording medium 20 capable of direct overwrite in Fig. 2 includes a dielectric layer 22, a memory layer 23, an intermediate layer 24, a recording layer 25, a switch layer 26, an initialization layer 27, and a protective film 28 which are sequentially stacked on a transparent substrate 21. As the substrate 21, a glass substrate having disk-like tracking grooves is used. The dielectric layer 22 and the protective film 28 are made of SiN; the memory layer 23, TbFeCo; the intermediate layer 24, GdFeCO; the recording layer 25, TbDyFeCo; the switch layer 26, TbFeCo; and the initialization layer 27, TbCo. These layers are formed to have predetermined thicknesses, respectively. The memory layer 23 has a TM (Transition Metal) rich composition. The recording layer 25 has an RE (Rare earth) rich composition with a compensation temperature between room temperature and the Curie temperature.

The optical disk 2 is not limited to the above magneto-optical recording medium 20, and a phase change medium 30 capable of direct overwrite in Fig. 3 may be used. The phase change medium 30 includes a dielectric layer 22, a recording layer 25, and a protective film 28 which are sequentially stacked on a substrate 21. For example, the recording layer 25 is made of GeSbTe.

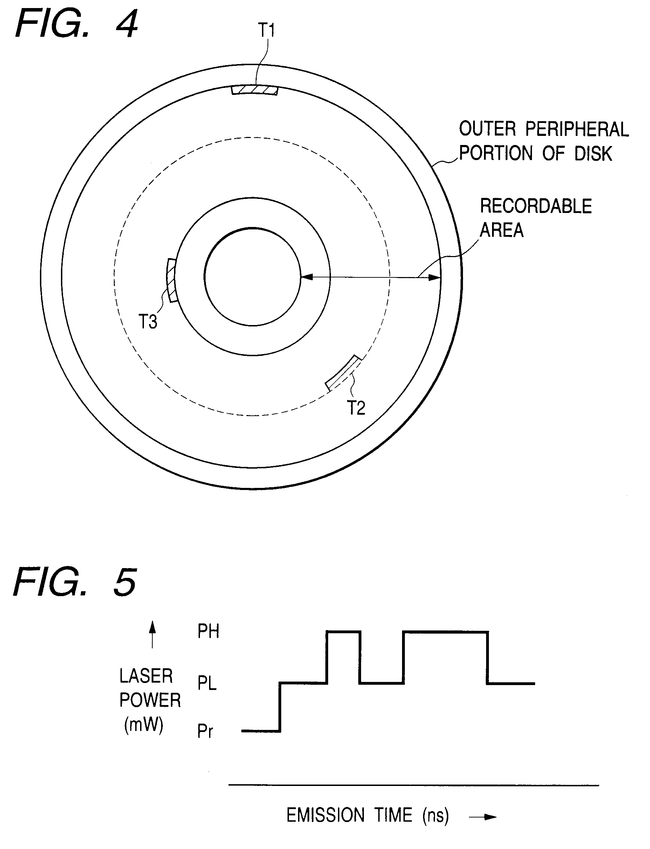

The optical disk 2 used in this embodiment is divided into a plurality of almost concentrical areas called zones. Different recording frequencies are set for the respective zones. The recording frequency increases toward outer zones. Test recording is performed in each zone to determine the optimal light intensity in recording information. For this purpose, three test recording areas T1, T2, and T3 for determining recording conditions are set in the recordable area of the optical disk 2, as shown in Fig. 4. The test recording areas T1 and T3 are respectively positioned on the outer and inner peripheral sides of the recordable area in the radial direction, whereas the remaining test area T2 is set in the middle of the recordable area in the radial direction.

Fig. 5 is a graph showing modulation of a recording power and a reproduction power in direct overwrite. The ordinate represents the intensity of a laser beam; and the abscissa, the emission time.

Referring to Fig. 5, reference symbol PL denotes a low level (erase power) in a test recording operation; PH, a high level (recording power); and Pr, a beam intensity (reproduction power) in a reproducing operation.

### (First Embodiment)

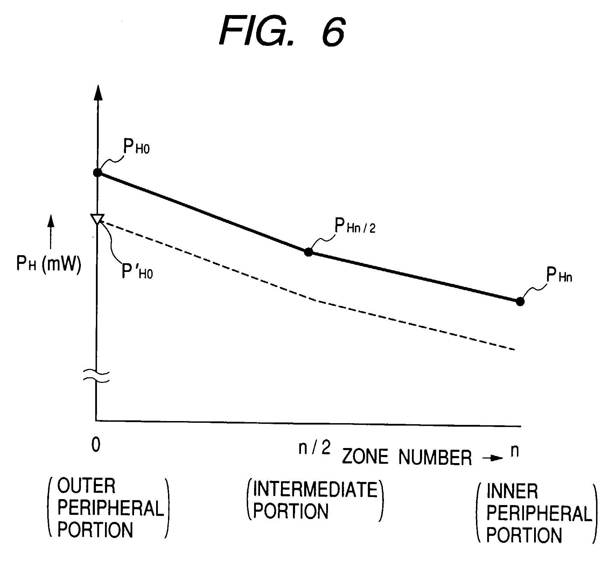

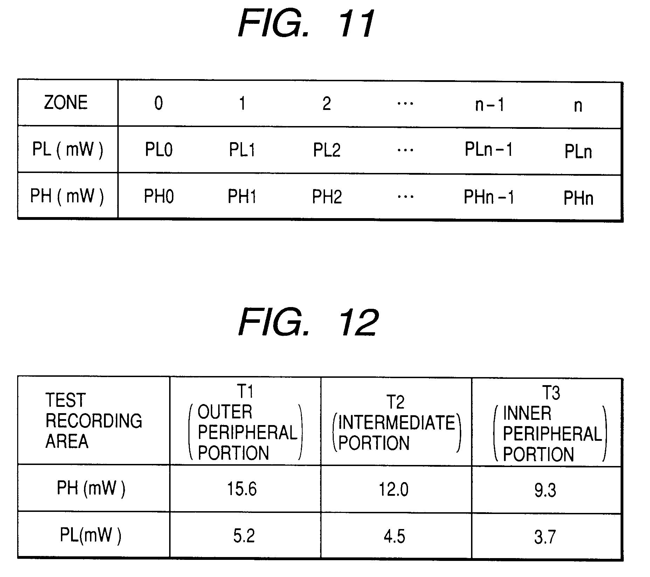

A procedure for determining a light intensity in recording information in an optical recording apparatus 1a or 1b having the above arrangement will be described next.
(1) An optical disk 2 is loaded into the optical recording apparatus 1a or 1b, and the optical disk 2 is rotated by a driving motor 3. An optical head 5 is then moved in the radial direction to move the irradiation position of a laser beam 4 to a test recording area. A control circuit 10 reads out test pattern data from a memory 7 and sends it to a modulation circuit 6 to perform control to record a test pattern a plurality of times such that three test recording areas T1, T2, and T3 are irradiated with the laser beam 4 while changing the light intensity for the respective areas. The optical head 5 is then moved to the respective test areas to reproduce the recorded test patterns. The reproduced signals are sent to the control circuit 10 through a reproducing circuit 9 to obtain the optimal recording powers for the respective test areas.
(2) An arithmetic circuit 11 obtains recording powers for all the areas in accordance with the optimal recording powers for the three test recording areas T1, T2, and T3, obtained in step (1). For example, the relationship between a recording power PH and each zone is indicated by the solid line in Fig. 6. The optimal recording power increases toward the outer peripheral portion. A table of recording powers for the respective zones, like the one shown in Fig. 11, is generated from the recording powers for the respective zones which are obtained on the basis of the relationship shown in Fig. 6. The table generated by the arithmetic circuit 11 in this manner is stored in the memory 7 through the control circuit 10.
(3) When information is to be recorded on the optical disk 2, the control circuit 10 reads out the recording power table generated in step (2) from the memory 7, and sets powers in accordance with the table.
(4) After the optical recording apparatus 1a or 1b is activated, the temperatures of the apparatus and the optical disk 2 loaded therein rise with a lapse of time. The temperature of the optical disk may drop depending on a change in ambient temperature. With this temperature change, the optimal recording power changes. This temperature change can be detected by using a temperature sensor 8. The control circuit 10 receives and stores temperature information output from the temperature sensor 8 in a test recording operation, and keeps monitoring temperature information from the temperature sensor 8 afterward. If a temperature change equal to or larger than a predetermined value occurs after the preceding test recording operation, the control circuit 10 performs control to execute a test recording operation again. The optical recording apparatus 1b shown in Fig. 10 performs a test recording operation again when a signal indicating a lapse of a predetermined period of time is output from a timer 12. In the above case, a test recording operation is performed again in the recordable area T1 on the outer peripheral portion to obtain a new recording power P'H0 for this area.
(5) The recording powers for the respective zones which are indicated by the solid line in the graph of Fig. 6 are corrected to the recording powers indicated by the dashed line on the basis of the recording power P'H0 in the area on the outer peripheral portion. In addition, the table of the recording powers for the respective zones is updated, and new recording powers for all the areas after the temperature change are obtained. More specifically, the recording powers after the temperature change can obtained by performing a test recording operation in only the area on the outer peripheral portion of the three test recording areas T1, T2, and T3. The recording powers can therefore be obtained in a period of time about 1/3 the time required for the test recording operation performed immediately after the disk is loaded. Since the time during which processing performed by the user is temporarily interrupted as in a test recording operation exerts great influences on a system in which the transfer rate per unit time is high, like a direct overwrite scheme, this method is very effective.

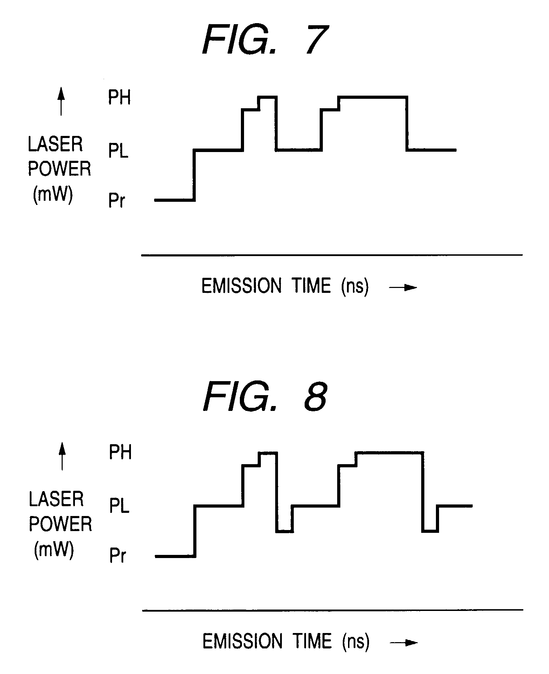

A test recording operation after a temperature change is preferably performed in an area in which the allowable width of a recording power is relatively small. If the allowable width on the outer peripheral portion is larger than the allowable widths in the remaining areas, a test recording operation may be performed in an area other than the area on the outer peripheral portion. Furthermore, according to this method, similar effects can be obtained regardless of the modulation scheme for a recording power in a recording operation. For the sake of descriptive convenience, the modulation method shown in Fig. 5 has been described above. Obviously, however, the same effects as described above can be obtained by a modulation method of converting a high power into a multivalue power (see Fig. 7), a modulation method which additionally uses thermal blocking before or after emission of a high-power laser beam (see Fig. 8), or a modulation method of emitting a high-power laser beam in the form of pulses.

The embodiment based on the above procedure will be described next.

First of all, the optical disk 2 having an optical recording medium capable of direct overwrite formed on a transparent substrate was prepared. The recordable area of the optical disk 2 was divided into 34 areas from the 0th to 33rd areas, including test recording areas T1 to T3 like those shown in Fig. 4. The test recording area 1 was positioned in the 0th zone on the outermost peripheral side; the test recording area T2, in the 17th zone on an intermediate portion; and the test recording area T3, in the 33rd zone on the innermost peripheral portion.

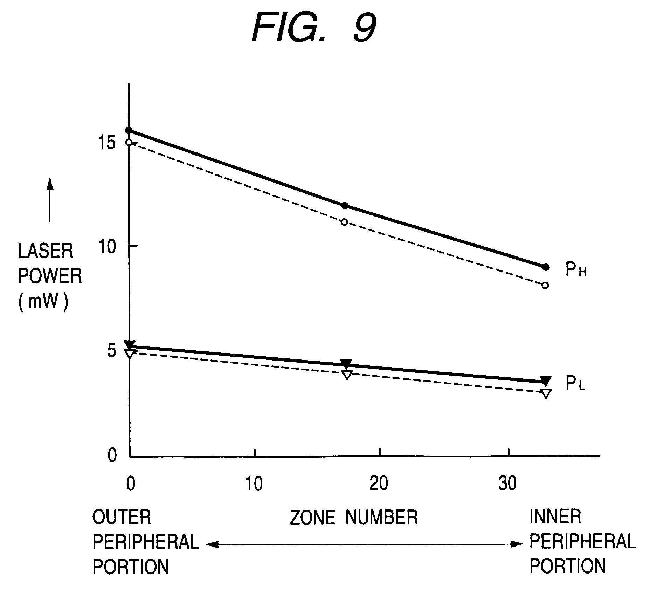

The power supply of the optical recording apparatus 1 was turned on, and the optical disk 2 was loaded therein. A sensor capable of detecting the temperature in the apparatus was mounted on a substrate mounted in the optical recording apparatus. Random patterns as test patterns were test-recorded in the three test recording areas T1, T2, and T3 immediately after the disk was loaded. This test recording is performed by modulating a laser beam as shown in Fig. 5 while maintaining the ratio of the high level PH to the low level PL constant in each area. In the test recording operation, every time the recording power was changed and recording was performed, the number of error bytes was obtained from a reproduced signal to obtain the optimal power from the relationship between the recording power and the number of error bytes. Fig. 12 shows powers in the respective areas. Referring to Fig. 9, the calculated high level PH and the low level PL are respectively indicated by "●" (solid dot) and " 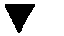 " (solid inverted triangle). In addition, a power table was generated for each zone.

Two zones in which no test recording was performed were selected from each of the outer peripheral portion, intermediate portion, and inner peripheral portion of the optical disk, i.e., six zones, were selected, and a 10-MB random pattern was recorded in each zone by using the values of the power table. The number of error bytes obtained from the reproduced signal from each zone was smaller than the allowable value. It was therefore confirmed that recording was performed with proper powers.

A 5-deg rise in the temperature in the apparatus was detected about 10 minutes after the optical disk 2 was loaded in the apparatus. Test recording was then performed in the test recording area T1. The optimal high level PH and low level PL were 15.0 mW and 5.0 mW, respectively. The high level PH and the low level PL which were corrected on the basis of the above powers are indicated by "○" (hollow bullet) and "∇" (hollow inverted triangle), respectively. Patterns different from those written before were overwritten in the above six zones by using the values of the updated power tables. The number of error bytes obtained from each reproduced signal was smaller than the allowable value. It was therefore confirmed that the old information was erased, and overwrite was properly performed.

### (Comparative Example)

A comparative example of the above embodiment will be described below.

The same test recording as that in the embodiment was performed immediately after the same optical disk as that in the embodiment was loaded in the apparatus to generate optimal recording power tables.

After a 5-deg rise in temperature was detected by the temperature sensor mounted in the optical recording apparatus 1, test recording was performed in three test recording areas T1, T2, and T3 again. The time required between the start of test recording and updating of the power tables was about two times that required in the embodiment.

### (Second Embodiment)

Another embodiment will be described next.

Recording powers are obtained in the following procedure in this embodiment.

### (1) Initial Test Recording

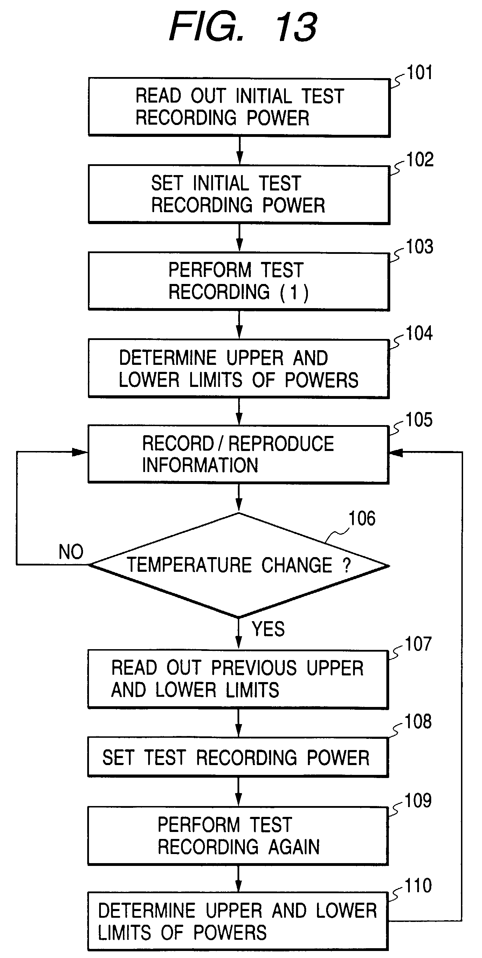

An optical disk 2 is loaded into an optical recording apparatus 1a or 1b, and the optical disk 2 is rotated by a driving motor 3. An optical head 5 is moved in the radial direction to move the irradiation position of a laser beam 4 to a test recording area. A control circuit 10 reads out test pattern data from a memory 7 (step 101 in Fig. 13), and sends the test pattern to a modulation circuit 6. The control circuit 10 also sets a test recording power (step 102 in Fig. 13). The control circuit 10 performs control to record the test pattern a plurality of times such that three test recording areas T1, T2, and T3 are irradiated with the laser beam 4 while changing the laser power for the respective areas. The optical head 5 is then moved to the respective test areas to reproduce the recorded test patterns (step 103 in Fig. 13). The reproduced signals are sent to the control circuit 10 through a reproducing circuit 9 to obtain the allowable ranges (upper and lower limit values) in the respective test recording areas (step 104 in Fig. 13). Test recording immediately after the disk is loaded is performed in the above manner.

The initial recording power (Pt0) for the above test recording operation is determined by one of the following three methods. In the first method, the value of a power (Pt0) in a test recording operation is stored in, for example, the memory 7 in the recording apparatus in advance. A test pattern is recorded on the basis of the value read out from the memory. In the second method, a recording power used to write information on a disk in a normal state is stored in, for example, the memory 7 in the recording apparatus. A power for test recording is then determined on the basis of the value read out from the memory to record a test pattern. In the third method, information about a recording power is written on the optical disk 2 in advance, and a power for test recording is determined on the basis of the information read out from the disk, thereby recording a test pattern.

In this embodiment, test recording is performed while the ratio of PH to PL is kept constant in each area. That is, when PH is to be sequentially changed, PL is also changed such that PH/PL becomes a predetermined value.

The upper and lower limits of a recording power in a test recording area are obtained as follows. A test pattern is reproduced in the above manner after or at the same time test recording is performed with the power Pt0, and the number of error bytes is obtained from a reproduced signal by the control circuit 10. That is, the test pattern is compared with the reproduced data to obtain the number of bytes which cannot be properly reproduced.

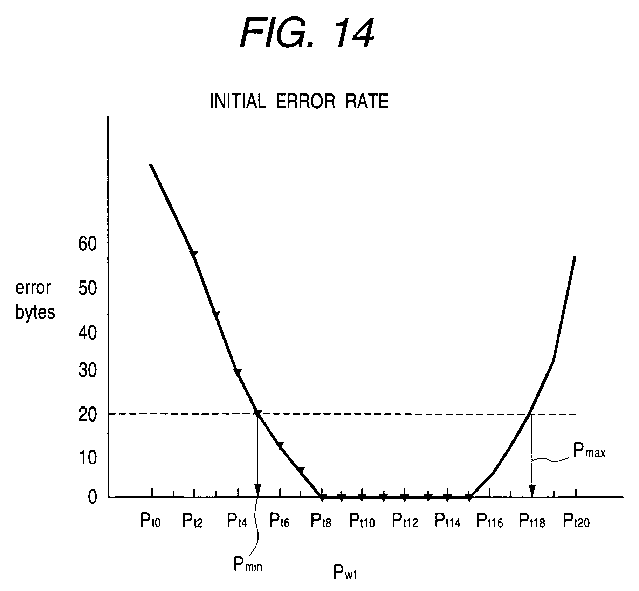

The relationship between each recording power and the number of error bytes at each recording power is obtained by repeating test recording while sequentially increasing or decreasing the recording power Pt0. Test recording is performed by using the power modulation scheme shown in Fig. 5 while PH is sequentially increased from Pt0. Fig. 14 shows the relationship between the powers and the numbers of error bytes in this case. Since the optimal recording powers for media vary and the optimal recording power changes with changes in the temperature of a medium and the temperature in the recording apparatus, an initial test recording operation must be performed while the power is changed in a wide range as compared with the second and subsequent test recording operations.

Referring to Fig. 14, if, for example, the allowable number of error bytes is 20 in this reproducing system, upper and lower limits Pmax and Pmin of the recording power are Pt18 and Pt5, respectively. A recording power used when the user is to record information is selected from the range of Pmax to Pmin (a mean value of Pmax and Pmin is preferably selected). Recording powers in all areas are determined by calculations from the test recording results obtained in the inner peripheral area T1, the intermediate area T2, and the outer peripheral area T3. In addition, the upper and lower limits of the recording powers in the inner peripheral area T1, the intermediate area T2, and the outer peripheral area T3 are stored in a predetermined area on the optical disk 2 or a storage unit (e.g., the memory 7) mounted in the recording apparatus.

### (2) Second and Subsequent Test Recording Operations

After the initial test recording operation is completed, the recording apparatus performs a recording or reproducing operation with the recording powers obtained in the test recording operation (step 105 in Fig. 13).

After the optical recording apparatus 1a or 1b is activated, the temperatures of the apparatus and the optical disk 2 loaded therein rise with a lapse of time. The temperature of the optical disk may drop depending on a change in ambient temperature. With this temperature change, the optimal recording power changes. This temperature change can be detected by using a temperature sensor 8. The control circuit 10 receives and stores temperature information output from the temperature sensor 8 in a test recording operation, and keeps monitoring temperature information from the temperature sensor 8 afterward. If a temperature change equal to or larger than a predetermined value occurs after the preceding test recording operation, the control circuit 10 performs control to execute a test recording operation again. The optical recording apparatus 1b shown in Fig. 10 performs a test recording operation again when a signal indicating a lapse of a predetermined period of time is output from a timer 12.

When a temperature change equal to or larger than the predetermined value is detected by the temperature sensor mounted in the recording apparatus, or the predetermined period of time elapses after the previous test recording operation, test recording is performed again (step 106 in Fig. 13). In the second and subsequent test recording operations, although a power shift from that in the previous test recording operation is expected due to a change in temperature, since the disk is not replaced, the power need not be changed in a wide range as in the initial test recording operation. It suffices if test recording is performed in a range narrower than the range in the initial test recording operation, which includes the previous upper and lower limits. The control circuit 10 reads out the upper and lower limits of the recording power in each test recording area which are stored in the previous test recording operation (step 107 in Fig. 13). The control circuit 10 then sets a range in which the recording power is to be changed in this test recording operation (step 108 in Fig. 13).

When the temperature rises, it is expected that the optimal recording power will decrease. For this reason, the lower limit of the range in which the recording power is to be changed is preferably set to a value slightly smaller than the previous lower limit. In this case, the upper limit may be set to a value equal to or slightly smaller than the previous upper limit. When the temperature drops, the range is set in a reverse manner to that described above.

When the range in which the recording power is to be changed is determined, test recording is performed in the same manner as in the initial test recording operation (step 109 in Fig. 13) to determine the upper and lower limits of a recording power (step 110 in Fig. 13). It suffices if the recording power to allow the user to record information is set to an intermediate value between the obtained upper and lower limits. In addition, the obtained upper and lower limits are stored in the memory 7 to be read out in the next test recording operation.

The embodiment based on the above procedure will be described next.

### (1) Initial Test Recording Operation

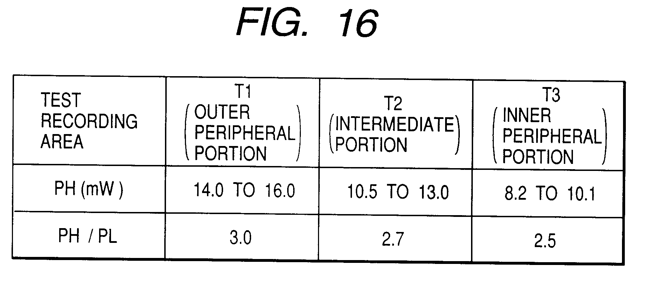

First of all, an optical disk having an optical recording medium capable of direct overwrite formed on a transparent substrate was prepared. The power supply of the optical recording apparatus was turned on, and the optical disk was loaded therein. Information about light intensities in test recording was held in the recording apparatus. Test recording was performed while the light intensity was sequentially changed by reading out this light intensity information. Fig. 16 shows PH for test recording in each area, read out from the recording apparatus. In this embodiment, data indicating the range in which PH was changed in test recording was stored in the memory 7 in the recording apparatus. Immediately after the disk was loaded, random patterns as test patterns were test-recorded in the three test recording areas on the inner peripheral portion, intermediate portion, and outer peripheral portion while modulation was performed as shown in Fig. 5 and the ratio of PH to PL was kept constant in each area. In test recording, every time the recording power was changed and recording was performed, the number of error bytes was obtained from the reproduced signal.

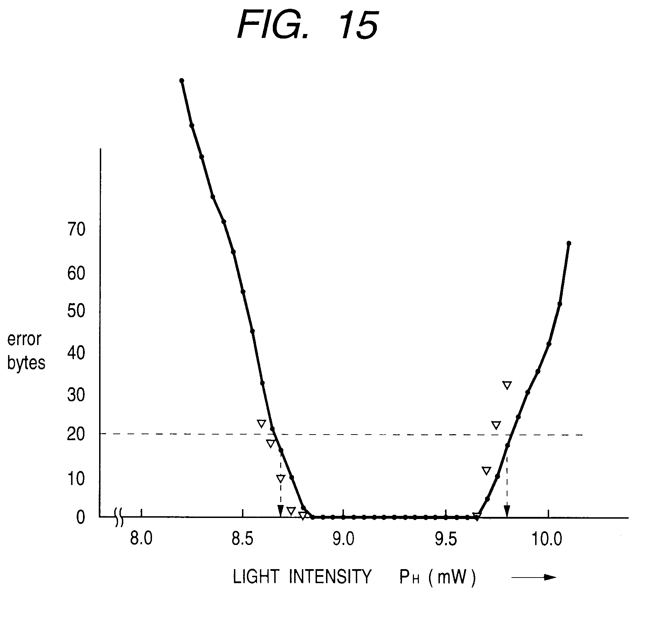

Fig. 15 shows the result of test recording on the inner peripheral portion, i.e., the relationship between PH (mW) and the number of bytes on the inner peripheral portion. When the allowable number of error bytes was 20, the upper and lower limits of PH were 9.8 mW and 8.7 mW, respectively. The upper and lower limits in test recording were respectively set to 9.9 mW and 8.6 mW in accordance with these values. The upper and lower limits in the next test recording operation were determined from the results of test recording in the respective areas. These values were held in a predetermined portion of the recording apparatus. A light intensity for recording of information in a data area is set on the basis of the result of test recording.

### (2) Second Test Recording Operation

Test recording was performed again about 10 minutes after the optical disk was loaded. Light intensities for test recording were determined by reading out the upper and lower limits in the previous test recording operation. Test recording was performed on the inner peripheral portion with an intensity in the range of 8.6 mW to 9.8 mW. The number of error bytes in each test recording operation was indicated by "∇" in Fig. 15. The upper and lower limits were 9.7 mW and 8.6 mW, respectively. The upper and lower limits of a test recording range set based on the upper and lower limits in the initial test recording and a proper light intensity range were obtained. When new information was recorded in the data portion, and the corresponding reproduced signal was observed, only the signal representing the new information was found, and hence it was confirmed that information erasing and recording operations were properly performed.

In the second test recording operation, therefore, proper recording powers were obtained by test recording in a range narrower than the intensity range (Fig. 16) in the initial test recording operation.

### (3) Third and Subsequent Test Recording Operations

Once the disk is loaded into the recording apparatus, proper light intensities for recording, reproducing, erasing operations and the like mainly depend on a change in temperature. For this reason, these light intensities do not greatly deviate from the proper light intensities in the initial operation. If, therefore, the upper and lower limits of light intensities are obtained in advance by performing test recording while changing the light intensity in a wide range upon loading of the disk, proper powers can be obtained by performing test recording in a range including the upper and lower limits in the next test recording operation. This shortens the time required for test recording. The third and subsequent test recording operations can be satisfactorily performed in light intensity ranges based on the upper and lower limits in the previous test recording operations.

In addition, such test recording may be performed only when the temperature of the recording apparatus or the disk changes. A range in the initial test recording operation may be determined by reading out information about light intensities from the disk, and test recording may be performed on the basis of this intensity. In addition, a reduction in the time required for test recording can also be expected by applying the above test recording to a disk auto-changer or jukebox which handles a plurality of disks.

### (Third Embodiment)

The third embodiment will be described next.

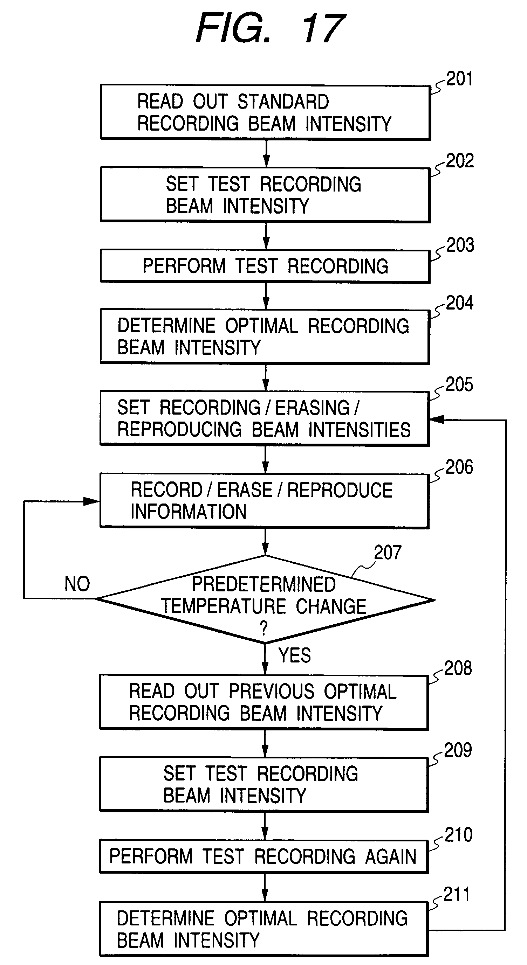

Fig. 17 is a flow chart showing a procedure for an optical recording method according to this embodiment.

Information about the standard intensity of a recording beam (standard recording beam intensity) in each zone is recorded in a predetermined area on an optical disk 2 used in this embodiment. In addition, test recording areas are set in the respective zones on the optical disk 2.

This magneto-optical disk is loaded into a optical recording apparatus 1a or 1b, and the optical disk 2 is rotated by a spindle motor 3. An optical head 5 is then moved in the radial direction to move the irradiation position of a light beam 4 to the predetermined area, thereby loading the standard recording beam intensities. This information can be loaded by using the optical head 5 and a reproducing circuit 9.

Information about the type of disk and the like may be recorded in the predetermined area on the optical disk 2 instead of the standard recording beam intensity information. The information about the type of disk and the like may be read to set standard recording beam intensities in accordance with the read information.

The optical head 5 is moved in the radial direction to move the irradiation position of the light beam 4 to a test recording area. A control circuit 10 reads out test pattern data from a memory 7 (step 201 in Fig. 17). The control circuit 10 sends the test pattern to a modulation circuit 6 and sets a beam intensity (recording power) for test recording (step 202 in Fig. 17). The control circuit 10 then performs control to record test patterns in the respective test areas a plurality of times while changing the beam intensity in the recording areas set in the respective zones (step 203 in Fig. 17).

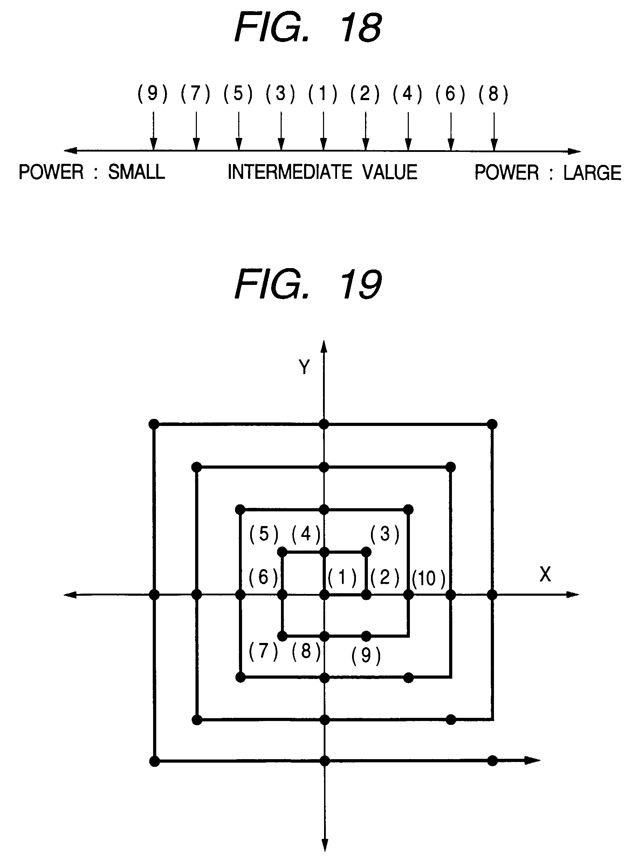

In this case, the beam intensity is changed in the following manner. Fig. 18 shows how the beam intensity is changed. First of all, the control circuit 10 sets the beam intensity to the standard recording beam intensity (indicated by reference numeral (1)), and records a test pattern. Subsequently, the control circuit 10 performs test recording by alternately setting the beam intensity to intensities higher and lower than the standard recording beam intensity (1) as the median. The control circuit 10 changes the beam intensity to intensities which gradually differ from the standard recording beam intensity in the order of intensities (2), (3), (4),..., (8), and (9).

Recording is performed in the respective recording areas while the beam intensity is changed in the above manner. After this recording operation, the optical head 5 is moved to each test recording area to reproduce the recorded test pattern. The reproduced signal is sent to the control circuit 10 through the reproducing circuit 9. The control circuit 10 then obtains the optimal recording beam intensity in the zone to which the corresponding test recording area belongs (step 205 in Fig. 17).

Several methods can be used to determine whether a set beam intensity is the optimal recording beam intensity. According to the first method, for example, a test pattern demodulated from a reproduced signal from which a recorded test pattern is reproduced, the recorded test pattern, and the reproduced signal are compared with each other. As the beam intensity deviates from the optimal recording beam intensity, recording cannot be properly performed. For this reason, the shape of the mark recorded on the optical disk 2 deviates from the optimal shape, resulting in an inaccurate reproduced signal. Consequently, the recorded pattern differs from the pattern demodulated from the reproduced signal.

In overwrite optical recording, with an increase in deviation from the optimal recording beam intensity, a mark recorded before overwrite cannot be completely erased and tends to be left after overwrite. Consequently, the recorded pattern differs from the pattern demodulated from the reproduced signal. In either case, such a difference is detected as a data error (error). The median in a beam intensity range in which no error is detected is therefore set as the optimal recording beam intensity.

According to the second method, of the marks used to record information, the shortest mark is repeatedly recorded first, and then the longest mark is repeatedly recorded. This mark pattern is reproduced to detect the level difference, i.e, the offset amount, between the level center of reproduced signal levels corresponding to the repetition of the shortest mark and the level center of reproduced signal levels corresponding to the repetition of the longest mark. A recording beam intensity that eliminates the offset amount is set as the optimal recording beam intensity.

The optimal recording beam intensities are set in the respective recording zones by the first or second method described above, and are stored in a storage unit (e.g., the memory 7) in the recording apparatus. Although test recording is preferably performed in each recording zone, it takes too much time to perform test recording in all zones on an optical disk having many recording zones. For this reason, test recording may be performed in several recording zones to estimate, on the basis of the test results, optimal recording beam intensities in zones in which no test recording is performed.

Subsequently, the recording apparatus performs a recording or reproducing operation with the obtained optimal recording beam intensities (step 206 in Fig. 17).

To cope with changes in environmental temperature, test recording is performed again at predetermined time intervals (when the optical recording apparatus 1b is to be used) or when a predetermined change amount is detected upon measurement of an environmental temperature (when the optical recording apparatus 1a is to be used; step 207 in Fig. 17). In this case, beam intensities for test recording are obtained on the basis of the optimal recording beam intensities obtained by the previous test recording operation. The data of the previously obtained optimal recording beam intensities is read out (step 208 in Fig. 17). Beam intensities for test recording are then set on the basis of the data (step 209 in Fig. 17). In this case, the beam intensity for test recording need not be changed in a range as wide as in the initial test recording operation described with reference to Fig. 18. A recording beam intensity range covering only values near the previous optimal value as the median may be set, and recording beam intensities may be selected from the intensity range at equal intervals.

Test recording is performed again with the beam intensities set in this manner (step 210 in Fig. 17). The optimal recording beam intensities are then obtained in the same manner as described above (step 211 in Fig. 17). The obtained optimal recording beam intensities are stored in the memory 7. Since test recording can be performed with beam intensities in a range narrower than that set in the previous test recording operation, the number of times recording is performed can be reduced, thereby greatly shortening the time required for one test recording operation. As a result, the overall data transfer rate increases.

The following is the reason why test recording can be reliably performed by this method. Variations in the recording sensitivity of an optical disk due to changes in environmental temperature are sufficiently smaller than variations in the recording sensitivities of a plurality of optical disks or variations in recording beam intensities in a plurality of recording apparatuses. For this reason, the probability that the optimal recording beam intensity obtained by a new test recording operation is near the previous optimal recording beam intensity is very high. If, therefore, the optimal recording beam intensity obtained by the previous test recording operation is set as the median (initial value) of beam intensities for test recording, and a recording beam intensity range covering only values near the median is set, there is a very high probability that the new optimal recording beam intensity is present in this range. That is, test recording can be performed by this method without posing any problem.

The recording beam intensity may be changed in test recording by the following method. As shown in Fig. 18, the optimal recording beam intensity in the previous test recording operation is set as the median. The recording beam intensity is alternately changed to values larger and smaller than the median such that the deviation from the median gradually increases. With this operation, test recording is sequentially performed with recording beam intensities from the previous recording beam intensity to values next to this beam intensity, thereby efficiently obtaining an optimal recording beam intensity.

An initial value (median) used for test recording is not limited to the immediately preceding optimal recording beam intensity, and the optimal recording beam intensity obtained in test recording performed two or three operations ahead of the current operation may be used. With such a value, the object of the present invention can satisfactorily achieved.

In light intensity modulation overwrite recording as well, two optimal recording beam intensities of high and low levels PH and PL can be efficiently obtained by this method.

Fig. 19 shows a procedure (changing method) for setting two recording beam intensities in performing test recording on an optical modulation overwrite recording medium. Referring to Fig. 19, the X-axis represents PH; and the Y-axis, PL. The combination of the optimal recording beam intensities (PHD, PLD) obtained by the previous test recording operation is set as a combination of initial values (the median indicated by reference numeral (1) in Fig. 19). If a combination of two values is represented by a position on the coordinate system, the combination of recording beam intensities to be used may be changed in the following sequence: (1), (2), (3),.... That is, test recording is sequentially performed with the combinations of beam intensities indicated by (1), (2), (3),....

By performing test recording in this manner, combinations of optimal recording beam intensities can be efficiently obtained. Obviously, in this case as well, even if the optimal recording beam intensities obtained by test recording performed before the immediately preceding test recording operation are used, the object of the present invention can be satisfactorily achieved.

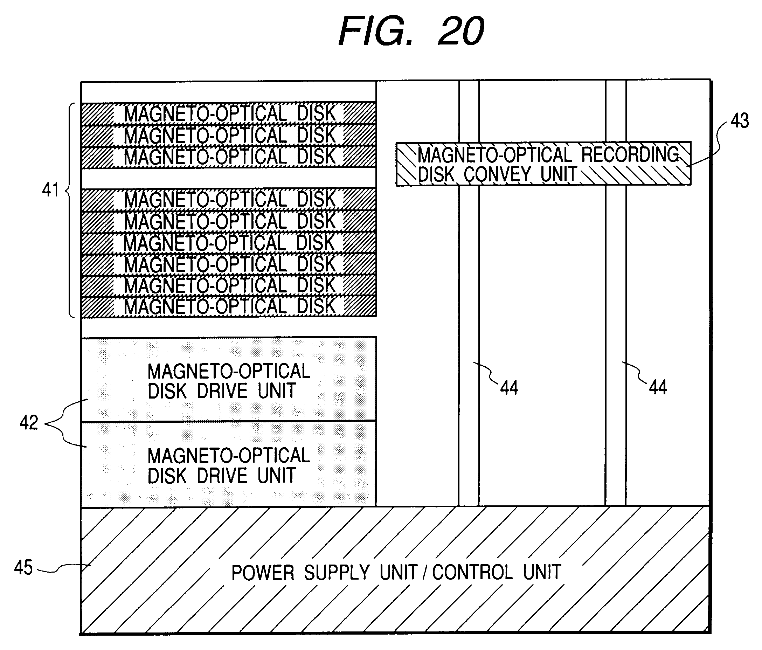

Fig. 20 shows the arrangement of an auto-changer apparatus (also called a jukebox) for magneto-optical disks. A plurality of magneto-optical disks 41 are set in this apparatus. The apparatus includes a plurality of magneto-optical disk drive units 42. As this magneto-optical disk drive unit, a unit similar to the optical recording apparatus in Fig. 1 or 10 is used. The apparatus also includes a convey unit 43 and a convey mechanism 44 which are controlled by a power supply unit/control unit 45. The convey unit 43 picks up one of the magneto-optical disks 41 and holds it. The convey unit 43 is moved to one of the magneto-optical disk drive units 42 in the vertical direction by the convey mechanism 44 to insert the held magneto-optical disk 41 into the insertion port of the magneto-optical disk drive unit 42.

The convey unit 43 moves to one of the magneto-optical disk drive units 42, removes the inserted magneto-optical disk from the magneto-optical disk drive unit 42, and returns it to the place where the magneto-optical disk has been set.

With this operation, a plurality of magneto-optical disks can be conveyed to a plurality of drives, or a magneto-optical disk may be returned to the initial position and another disk may be conveyed to a drive.

In this apparatus, a magneto-optical disk is conveyed and inserted into a drive unit in accordance with a request from an external control device such as a computer. In the drive unit (optical recording apparatus), when a disk is inserted, optimal recording beam intensities are obtained by performing test recording. Recording is performed on the basis of the obtained intensities. The recorded data is reproduced by the irradiation of a reproducing beam.

In this case, an optimal recording beam intensity in each drive unit (optical recording apparatus) depends on variations in the recording sensitivities of the respective magneto-optical disks and variations in the temperatures of the respective magneto-optical disks. In this apparatus, since a plurality of disks are set in the single apparatus, variations in the temperatures of the disks are small. The optimal recording beam intensity therefore mainly depends on the variations in the recording sensitivities of the magneto-optical disks. Since the variations in disk temperature are small, a recording beam intensity range for test recording can be further narrowed in the auto-changer apparatus.

If, for example, the disk inserted in the drive unit in the auto-changer apparatus is replaced with another disk, test recording is performed to obtain an optical recording beam intensity. In this case, the apparatus reads out an optimal recording beam intensity obtained by the previous test recording operation (i.e., an optimal recording beam intensity for the previously inserted disk) from the memory 7, and determines an optimal recording beam intensity for test recording on the basis of the read value, instead of reading out a standard recording beam intensity. A beam intensity range and an optimal recording beam intensity may be performed by the same method as in the second and subsequent test recording operations described above. With this operation, the time required for test recording when a disk is replaced can be shortened. This method can be applied to the second embodiment.

By applying the respective embodiments to the auto-changer apparatus, the time required for test recording can further shortened.

According to the above optical recording method and apparatus, the time required for test recording can be shortened, and proper recording powers can be set even if a change in temperature and the like occur.

## Claims

1. An optical recording method of recording information on a recording medium irradiated with a beam while modulating an intensity of the beam, characterized by comprising the steps of
setting a plurality of test recording areas for determining recording conditions in areas at different radial positions on the recording medium, performing test recording in each test recording area, obtaining recording conditions corresponding to each area in recording on the recording medium on the basis of reproduced information from test-recorded information, obtaining an intensity of a beam for recording in another area on the recording medium on the basis of the obtained recording conditions, obtaining, when a change in temperature of a recording apparatus or the recording medium is detected after test recording, recording conditions after the change in temperature by performing test recording again, and determining light intensities for recording information on the recording medium on the basis of the recording conditions after the temperature change.

2. An optical recording method according to claim 1, characterized in that the method determines light intensities for recording on an optical recording medium capable of direct overwrite.

3. An optical recording method according to claim 1, characterized in that the recording medium is an optical recording medium which can be divided into a plurality of areas, and the method determines light intensities for recording on the optical recording medium capable of controlling a light intensity in each of the divided areas.

4. An optical recording method according to claim 1, characterized in that test recording is performed for an innermost peripheral area, an outermost peripheral area, and an intermediate area of a recordable area.

5. An optical recording method according to claim 4, characterized in that when a temperature change is detected, test recording is performed again in a test recording area on the outermost peripheral area on the recording medium to obtain light intensities, and light intensities for recording on all recordable areas on the recording medium are determined on the basis of the obtained light intensities.

6. An optical recording method of recording information on a recording medium irradiated with a beam while modulating an intensity of the beam, characterized by comprising the steps of
setting a plurality of test recording areas for determining recording conditions in areas at different radial positions on the recording medium, performing test recording on the recording medium a plurality of times while changing a light intensity, obtaining recording conditions corresponding to each area in recording on the recording medium on the basis of reproduced information from test-recorded information, obtaining intensities of beams for recording in another area of the recording medium on the basis of the recording conditions, performing test recording in at least one of the plurality of test recording areas a predetermined time after the test recording so as to obtain recording conditions after a lapse of the predetermined time, and obtaining light intensities for recording information on the recording medium on the basis of the obtained recording conditions.

7. An optical recording apparatus characterized by comprising:
rotation means for rotating a recording medium;
temperature detection means for detecting a temperature of the recording medium or said optical recording apparatus;
modulation means for modulating an intensity of a beam subjected to irradiation in accordance with information to be recorded;
reproduction means for reproducing information recorded by test recording;
means for obtaining recording conditions for each test recording area from reproduced information obtained by said reproduction means, and obtaining recording conditions, when the temperature of the recording medium or said optical recording apparatus changes, from reproduced information obtained by test recording performed afterward; and
calculation means for calculating light intensities in all areas in recording information on the basis of the recording conditions in each test recording area which are obtained by said means.

8. An optical recording method of recording information on a recording medium by irradiating the medium with light, characterized by comprising the steps of:
performing test recording on the recording medium while sequentially changing an intensity of light subjected to irradiation;
obtaining at least one of upper and lower limits of light intensities which allow proper recording on the medium based on the test recording result;
holding information about the upper or lower limit in the recording medium or a predetermined portion in said recording apparatus; and
performing a next test recording operation with a light intensity which is set based on the held upper or lower limit.

9. An optical recording method according to claim 8, characterized in that a light intensity range in which test recording is to be performed is determined on the basis of the upper or lower limit.

10. An optical recording method according to claim 8, characterized in that the next test recording operation is performed a predetermined time after the test recording.

11. An optical recording method according to claim 8, characterized in that the next test recording operation is performed when a change in temperature of the recording medium or a recording apparatus is detected.

12. An optical recording method according to claim 8, characterized in that the recording medium is a disk-like recording medium,
first test recording after a power supply of said recording apparatus is turned on or after the recording medium is loaded is performed in areas at a plurality of radial positions on the recording medium, and
test recording is performed at one radial position on the recording medium in a next recording operation, and light intensities in all areas on the recording medium are obtained on the basis of a light intensity obtained by the test recording at one position.

13. An optical recording method according to claim 8, characterized in that the recording medium is a disk-like recording medium, and
in an initial test recording operation to be performed when the recording medium is replaced with another recording medium, test recording is performed in areas at a plurality of radial positions on the recording medium while a light intensity is changed on the basis of the held upper or lower limit of light intensities.

14. An optical recording method according to claim 8, characterized in that information is recorded on the recording medium by using an optical modulation recording scheme of modulating a light intensity into at least two values.

15. An optical recording method according to claim 8, characterized in that the recording medium is a recording medium capable of direct overwrite.

16. An optical recording method of recording information on an optical recording medium,
characterized by comprising the steps of
in obtaining a recording beam intensity by test recording, setting a recording beam intensity range including recording beam intensity values obtained by an immediately preceding or preceding test recording operation, and performing test recording upon selecting a recording beam intensity from the intensity range.

17. An optical recording method according to claim 16, characterized in that the recording beam intensity range is an intensity range in which a recording beam intensity value obtained by an immediately preceding or preceding test recording operation is a median.

18. An optical recording method of recording information on an optical recording medium,
characterized by the steps of
in obtaining a recording beam intensity by test recording, setting a recording beam intensity range including recording beam intensity values obtained by the immeidately preceding test recording operation, and performing test recording upon selecting a recording beam intensity from the intensity range.

19. An optical recording method according to claim 17, characterized in that test recording is performed while sequentially setting recording beam intensities on the basis of a recording beam intensity obtained by an immediately preceding or preceding test recording operation as an initial value so as to gradually increase a deviation from the initial value.

20. An optical recording method of recording information on an optical recording medium,
characterized by comprising the steps of
in obtaining a recording beam intensity for a new recording medium by test recording when the optical recording medium is replaced, setting a recording beam intensity range including a recording beam intensity value obtained by an immediately preceding or preceding test recording operation, and performing test recording upon selecting a recording beam intensity from the intensity range.

21. An optical recording method according to claim 16, characterized in that the optical recording medium is an optical recording medium capable of performing overwrite recording by modulating a recording beam intensity into at least two values of high and low levels.
